# EUROPÄISCHE PATENTSCHRIFT

(11) **EP 3 209 949 B1**
(45) Veröffentlichungstag und Bekanntmachung des Hinweises auf die Patenterteilung: **02.06.2021**
(21) Anmeldenummer: 15784318.6
(22) Anmeldetag: 16.10.2015
(51) Int. Cl.: F24H 1/12, B60H 1/22, F24H 3/04, F24H 9/20, G01K 1/18, G01K 7/18, H05B 3/22, G01K 1/16

(54) **HEIZGERÄT MIT INTEGRIERTEM TEMPERATURSENSOR**
HEATER WITH INTEGRATED TEMPERATURE SENSOR
CHAUFFAGE AVEC CAPTEUR DE TEMPÉRATURE INTÉGRÉ

(30) Priorität: 21.10.2014 DE 102014015586
(43) Veröffentlichungstag der Anmeldung: 30.08.2017
(73) Patentinhaber: Webasto SE, 82131 Stockdorf (DE)
(72) Erfinder: ECKERT, Daniel, 82131 Stockdorf (DE); RECHBERGER, Hans, 82131 Stockdorf (DE); BUCKL, Stephan, 82131 Stockdorf (DE)
(74) Vertreter: Schumacher & Willsau
(86) Internationale Anmeldenummer: PCT/EP2015/074013
(87) Internationale Veröffentlichungsnummer: WO 2016/062631

(56) Entgegenhaltungen:
- EP-A1- 2 772 375
- DE-A1- 10 051 867
- US-B1- 6 782 196

## Beschreibung

Die vorliegende Erfindung betrifft ein Heizgerät, insbesondere ein elektrisches Heizgerät für ein Kraftfahrzeug mit integriertem Temperatursensor. Ein gattungsgemäßes Heizgerät ist beispielsweise aus der EP 2 772 375 A1 und der DE 100 51 867 A1 vorbekannt. Ferner ist aus der US 6,782,196 B1 ein Heizgerät vorbekannt, dass einen auf der weitere elektronische Bauelemente tragenden Leiterplatte angeordnete Temperatursensor aufweist.

Der vorliegenden Erfindung liegt die Aufgabe zugrunde, Überhitzungen eines Heizgerätes zuverlässig, effizient und schnell zu detektieren.

Beschrieben wird ein Heizgerät, insbesondere ein elektrisches Heizgerät für ein Kraftfahrzeug, mit einem Wärmetauschergehäuse, einem an einer Wärmeeintragsfläche Wärme aufnehmenden Wärmetauscherkern und einer elektronische Bauelemente zur Steuerung des Heizgerätes tragenden Leiterplatte, wobei die Leiterplatte an einer Außenseite des Wärmetauschergehäuses angeordnet ist, wobei ein Temperatursensor auf einer der Außenseite des Wärmetauschergehäuses zugewandten Seite der Leiterplatte angeordnet ist, wobei Verbindungsmittel vorgesehen sind, die den Temperatursensor wärmeleitend mit der Außenseite des Wärmetauschergehäuses verbinden, und wobei die Wärmeeintragsfläche des Wärmetauscherkerns wärmeleitend mit dem Wärmetauschergehäuse verbunden ist, so dass eine durch das Innere des Wärmetauschergehäuses verlaufende durchgängige kurze Wärmebrücke von der Wärmeeintragsfläche zu den Verbindungsmitteln erzeugt wird. Als Wärmeeintragsfläche des Wärmetauscherkerns kann ein Oberflächenbereich des Wärmetauscherkerns bezeichnet werden, an dem während des Betriebs des Heizgerätes erzeugte Wärme in den Wärmetauscherkern ein- oder übertritt. Die Wärmeeintragsfläche kann beispielsweise eine eine Brennkammer begrenzende Oberfläche des Wärmetauscherkerns sein, in der heiße Verbrennungsabgase erzeugt werden. Die Wärmeeintragsfläche kann beispielsweise auch eine ein elektrisches Schichtheizelement tragende Oberfläche des Wärmetauscherkerns sein. Die zu erzeugende Wärmebrücke kann als kurz bezeichnet werden, wenn sie zumindest nahe an der direkten kürzesten Verbindung im Sinne einer Luftlinie zwischen der Wärmeeintragsfläche und den Verbindungsmitteln liegt. Die Wärmebrücke kann als durchgehend angesehen werden, wenn in der Wärmebrücke keine Lücke besteht, in der beispielsweise zu erwärmendes Kühlmittel strömt. Durch die wärmeleitende Verbindung der Wärmeeintragsfläche des Wärmetauscherkerns mit dem Wärmetauschergehäuse in der Nähe der Verbindungsmittel, die den Temperatursensor wärmeleitend mit der Außenseite des Wärmetauschergehäuses verbinden, wird eine kurze direkte Wärmebrücke zwischen dem Temperatursensor und dem wärmsten Bereich des Heizgerätes, das heißt der Wärmeeintragsfläche des Wärmetauscherkerns, bereitgestellt. Auf diese Weise kann eine Temperaturveränderung an der Wärmeeintragsfläche schnell und zuverlässig durch die bereitgestellte kurze durchgängige Wärmebrücke an dem Temperatursensor erkannt werden. Insbesondere eine Temperaturerhöhung im Bereich des Wärmetauscherkerns, beispielsweise eine unerwünschte unzulässige Überhitzung, wird auf diese Weise innerhalb kürzester Zeit durch eine entsprechende Temperaturerhöhung im Bereich des Temperatursensors registriert. Da der Temperatursensor weiterhin außerhalb des Wärmetauschergehäuses angeordnet wird, kann der Aufbau des Wärmetauschers einfach gehalten werden. Die Verbindungsmittel können eine physische Anbindung des Temperatursensors mit der Außenseite des Wärmetauschergehäuses bereitstellen. Die Verbindungsmittel können beispielsweise ein gut wärmeleitendes Material, zum Beispiel gefülltes Silikon, umfassen oder aus diesem bestehen. Die Verbindungsmittel können beispielsweise mithilfe eines Dispenser-Verfahrens in den gewünschten Bereich zwischen der Außenseite des Wärmetauschergehäuses und dem Temperatursensor eingebracht werden. Dabei kann das wärmeleitende Material, beispielsweise eine dosierbare Paste, aus einem Dispenser dosiert an eine erwünschte Verbindungsstelle zwischen dem Wärmetauschergehäuse und dem Temperatursensor angebracht werden. Der Ausdruck "in der Nähe" kann insbesondere einen geringen räumlichen Abstand bezeichnen, wobei der Abstand in der Regel in der Ebene senkrecht zur kürzesten Verbindungslinie zwischen dem Temperatursensor und der Außenseite des Wärmetauschergehäuses betrachtet wird. Das Heizgerät kann beispielsweise ein kraftstoffbetriebenes oder ein elektrisch betriebenes Heizgerät sein. Die Wärmeeintragsfläche des Wärmetauscherkerns kann beispielsweise eine räumlich am weitesten von der Außenseite des Wärmetauschergehäuses entfernte Oberfläche des Wärmetauscherkerns sein. Möglich ist, dass die Wärmeeintragsfläche und die Außenseite des Wärmetauschergehäuses den Wärmetauscher an einander gegenüberliegenden Seiten begrenzen. Die Wärmeeintragsfläche kann also auf einer Außenseite des durch den Wärmetauscherkern und das Wärmetauschergehäuse gebildeten Wärmetauschers liegen, die der Außenseite des Wärmetauschers gegenüberliegt, in deren räumlicher Nähe der Temperatursensor angeordnet ist. Das elektrische Schichtheizelement kann eine elektrische Heizschicht sein, die mit zumindest einer ersten elektrischen Anschlussstelle, die mit einem Pluspol einer Spannungsquelle verbunden oder verbindbar ist, und zumindest einer zweiten elektrischen Anschlussstelle, die mit einem Massepol der Spannungsquelle verbunden ist. Zwischen der elektrischen Heizschicht und dem Wärmetauscherkern kann eine elektrische Isolationsschicht angeordnet sein, die den Wärmetauscherkern zumindest teilweise gegenüber der elektrischen Heizschicht elektrisch isoliert, wobei die elektrische Isolationsschicht an der zumindest einen zweiten elektrischen Anschlussstelle unterbrochen und elektrisch mit der elektrischen Heizschicht verbunden sein kann, um die elektrische Heizschicht elektrisch leitend mit dem Massepol der Spannungsquelle zu verbinden. Auf diese Weise kann die zumindest eine erste elektrische Anschlussstelle in einfacher Weise über den Wärmetauscherkern mit dem Massepol der Spannungsquelle verbunden werden, wenn der Wärmetauscherkern elektrisch leitend ist, ohne dass eventuell störende und/oder aufwendig herzustellende elektrische Verbindungen vorzusehen sind. Für den Fall, dass die elektrische Heizschicht mehrere voneinander getrennte erste elektrische Anschlussstellen umfasst, was beispielsweise der Fall sein kann, wenn die elektrische Heizschicht mehrere voneinander unabhängige Leiterbahnen umfasst, können diese gemeinsam über den Wärmetauscherkern mit dem Massepol der Spannungsquelle verbunden werden, so dass die Anzahl der herzustellenden elektrischen Verbindungen reduziert ist. In diesem Zusammenhang kann davon ausgegangen werden, dass durch die Unterbrechung der elektrischen Isolationsschicht an der zumindest einen zweiten elektrischen Anschlussstelle die elektrisch leitende Verbindung zwischen dem Wärmetauscherkern und der elektrischen Heizschicht "automatisch" bei der Herstellung des elektrischen Heizgerätes als Folge der gewählten Fertigungsprozesse und/oder der gewählten Abmessungen der Bestandteile des elektrischen Heizgerätes erreicht wird, ohne dass zusätzliche Montageschritte notwendig sind. Das Heizgerät kann dazu vorgesehen sein, ein Medium oder ein Volumen direkt oder indirekt zu erwärmen. Ein zu erwärmendes Volumen kann beispielsweise ein Fahrgastraum eines Fahrzeugs sein. Ein zu erwärmendes Medium kann beispielsweise ein wärmeübertragendes Fluid sein, etwa ein Gas wie Luft oder eine Flüssigkeit wie Wasser oder ein Wasser/AlkoholGemisch, beispielsweise ein Wasser/Glykol-Gemisch. Die elektrische Heizschicht kann in Verbindung mit der elektrischen Isolationsschicht als elektrisches Schichtheizelement aufgefasst werden. Der Wärmetauscherkern kann einerseits mit dem zu erwärmenden Medium beziehungsweise dem zu erwärmenden Volumen und andererseits mit dem Schichtheizelement in Kontakt stehen. Die thermische Leistung einzelner Leiterbahnen in einem Schichtheizelement kann gering sein, so dass eine größere Anzahl voneinander unabhängiger Leiterbahnen in einem größeren Schichtheizelement des elektrischen Heizgerätes zusammengefasst werden können, um eine erwünschte Heizleistung zu erreichen. Die zum Betrieb der einzelnen Leiterbahnen des Schichtheizelementes notwendigen elektrischen Anschlüsse können zumindest teilweise einzeln an der jeweiligen Leiterbahn des Schichtheizelementes angeordnet sein. Elektrische Heizgeräte mit Schichtheizelementen können beispielsweise bei hocheffizienten Hybrid- beziehungsweise Elektromobilen verwendet werden, um die direkte Verbrennung von fossilen Brennstoffen zur Beheizung des Fahrzeuginnenraums zu vermeiden. Erwünscht sind in diesem Zusammenhang insbesondere kleine, leicht zu fertigende Heizgeräte. Die Spannungsquelle kann wahlweise eine Wechselspannung oder eine Gleichspannung bereitstellen. Die Spannungsquelle kann weiterhin die zum Betrieb des Heizgerätes notwendige Spannung entweder im Niedervolt- oder im Hochvoltbereich bereitstellen. Möglich ist auch eine Umwandlung der von der Spannungsquelle bereitgestellten elektrischen Spannung in eine zum Betrieb des elektrischen Heizgerätes bevorzugte Spannung, beispielsweise in einem dem elektrischen Heizgerät zugeordneten Steuergerät. Das elektrische Heizgerät kann in einem Gehäuse angeordnet sein, welches wiederum beispielsweise in einem Fahrzeug angeordnet sein kann. Das Gehäuse kann als Teil des elektrischen Heizgerätes angesehen werden und beispielsweise eine eventuell erforderliche elektrische Isolation und/oder eine Führung für das zu erwärmende Medium bereitstellen. Es kann vorgesehen sein, dass eine elektrische Isolationsschicht direkt auf die Wärmeeintragsfläche des Wärmetauscherkerns aufgebracht ist. Unter dem Ausdruck "direkt aufgebracht" kann im vorliegenden Fall insbesondere das Auftragen der elektrischen Isolationsschicht auf die Wärmeeintragsfläche des Wärmeübertragers mithilfe eines thermischen Spritz- beziehungsweise Aufspritzverfahrens verstanden werden. Ein thermisches Spritzverfahren kann beispielsweise Plasmaspritzen, Kaltgasspritzen, Flammspritzen und/oder Suspensionsflammspritzen sein. Alternativ können auch andere Beschichtungsverfahren verwendet werden, die ebenfalls ein direktes Aufbringen/Auftragen einer dünnen elektrischen Isolationsschicht erlauben. Falls eine elektrische Isolationsschicht vorhanden ist, kann vorgesehen sein, dass die elektrische Heizschicht direkt auf die elektrische Isolationsschicht aufgebracht ist. Falls die elektrische Isolationsschicht vorhanden ist, kann die elektrische Heizschicht an der zumindest einen zweiten elektrischen Anschlussstelle auch direkt auf die Wärmeeintragsfläche des Wärmetauscherkerns aufgebracht sein. Auch die elektrische Heizschicht kann als dünne Schicht direkt auf die elektrische Isolationsschicht und die als zweite elektrische Anschlussstelle vorgesehene Unterbrechung der elektrischen Isolationsschicht aufgebracht werden. Dabei können ebenfalls die vorstehend bereits genannten thermischen Spritzbeziehungsweise Aufspritzverfahren zum Aufbringen der Schicht verwendet werden. Es kann vorgesehen sein, dass der Wärmetauscherkern elektrisch leitend ist oder eine elektrisch leitende Masseanschlussfläche umfasst. Insbesondere wenn der Wärmetauscherkern elektrisch isolierend ist, kann eine elektrisch leitende Masseanschlussfläche auf seiner Oberfläche vorgesehen sein, über die die elektrische Verbindung zu einem Massepol der Spannungsquelle realisiert sein kann und die bis in den Bereich der Wärmeeintragsfläche hineinreicht. Die Masseanschlussfläche kann insbesondere auch in einem Spritz- beziehungsweise Aufspritzverfahren auf den Wärmetauscherkern aufgebracht sein. Es kann auch vorgesehen sein, dass der Wärmetauscherkern ein metallisches Material, insbesondere Aluminium oder eine Aluminiumlegierung, umfasst. Das metallische Material kann insbesondere die für den Wärmetauscherkern vorteilhafte hohe thermische Leitfähigkeit mit einer elektrischen Leitfähigkeit kombinieren. Es kann vorgesehen sein, dass die elektrische Isolationsschicht eine keramische Schicht umfasst, insbesondere eine keramische Schicht aus Aluminiumoxid. Keramische Schichten können in einfacher Weise direkt auf den Wärmetauscherkern aufgetragen werden, wobei sie mit dem Wärmetauscherkern eine dauerhafte feste Verbindung eingehen können, wodurch eine gute Wärmeübertragung zwischen der elektrischen Heizschicht und dem Wärmetauscherkern im Bereich der Wärmeeintragsfläche gewährleistet ist. Weiterhin ist die keramische Schicht auch ausreichend stabil mit der Oberfläche des Wärmetauscherkerns verbunden, um bei der Erwärmung beziehungsweise Abkühlung auftretende Spannungen zu kompensieren. Diese Eigenschaft kann insbesondere aus zumindest ähnlichen thermischen Ausdehnungskoeffizienten des Wärmetauscherkerns und der isolierenden Schicht resultieren. Es kann vorgesehen sein, dass die elektrische Heizschicht ein metallisches Material, insbesondere Nickel oder eine Nickellegierung umfasst. Nickel beziehungsweise Nickellegierungen können leicht als ausreichend temperaturstabile ohmsche Heizwiderstände ausgebildet werden. Es kann vorgesehen sein, dass die elektrische Heizschicht in einer Schichtebene der elektrischen Heizschicht strukturiert ist und zumindest zwei voneinander unabhängige Widerstandsheizelemente umfasst. Auf diese Weise können mehrere voneinander unabhängige als Schichtheizelemente ausgebildete Widerstandsheizelemente gemeinsam in wenigen, von der Anzahl der Widerstandsheizelemente unabhängigen Fertigungsschritten auf der Wärmeeintragsfläche des Wärmetauscherkerns direkt aufgetragen werden. Einzelne Widerstandheizelemente können beispielsweise in Form von Leiterbahnen in der Heizschicht realisiert sein, wobei diese Leiterbahnen in der Heizschicht voneinander beabstandet angeordnet sind und jeweils eigene elektrische Anschlusskontakte haben können. Zur Vereinfachung der elektrischen Kontaktierung können diese elektrischen Anschlusskontakte zusammengeführt werden und gemeinsam mit der Spannungsquelle verbunden sein. Das elektrische Schichtheizelement kann zur Regelung der Heizleistung beispielsweise pulsweitenmoduliert mit elektrischer Leistung versorgt werden. Das elektrische Heizgerät kann als elektrisches Hochvoltheizgerät ausgeführt sein. Ein solches elektrisches Hochvoltheizgerät kann mit einer hohen Versorgungsspannung versorgt und betrieben werden. Die hohe Versorgungsspannung, kann beispielsweise mindestens 100 Volt betragen. Die hohe Versorgungsspannung kann in einem als Hochvoltbereich bezeichenbaren Spannungsbereich liegen, der bei 100 Volt beginnt. Das elektrische Heizgerät kann beispielsweise als Heizgerät für ein Elektro- oder Hybridfahrzeug vorgesehen sein. Das elektrische Heizgerät kann für den Betrieb an einem Hochspannungsbordnetz eines Elektro- oder Hybridfahrzeugs geeignet sein. In diesem Zusammenhang kann das elektrische Heizgerät insbesondere geeignet sein, direkt, das heißt ohne Zwischenschaltung von Spannungswandlern, die beispielsweise die dem elektrischen Heizgerät aus dem Hochspannungsbordnetz maximal zuführbare Versorgungsspannung begrenzen, mit dem Hochspannungsbordnetz eines Elektro- oder Hybridfahrzeugs betriebsfähig verbunden zu werden.

Ausgehend von dem gattungsgemäßen Heizgerät ist erfindungsgemäß vorgesehen, dass der Temperatursensor ein SMD-Sensor ist. SMD steht für "Surface Mounted Device" und bezeichnet einen unmittelbar auf der Platine montierten Temperatursensor, der direkt auf der Leiterplatte verlötet wird. Zusätzliche Gehäuse, Verkabelungen, Stecker oder Ähnliches können entfallen. Die Masse des SMD-Temperatursensors kann dementsprechend gering sein, so dass die Wärmekapazität des Temperatursensors sehr gering ist und eine Überhitzung im Bereich des Wärmetauscherkerns zeitnah durch den Temperatursensor detektiert wird.

Es kann vorgesehen sein, dass die Wärmebrücke zwischen der Wärmeeintragsfläche des Wärmetauscherkerns und den Verbindungsmitteln eine Verbindung zwischen dem Wärmetauschergehäuse und dem Wärmetauscherkern umfasst. Die Verbindung kann beispielsweise formschlüssig und/oder kraftschlüssig sein.

Es kann auch vorgesehen sein, dass die Verbindung stoffschlüssig ist. Eine stoffschlüssige Verbindung zwischen dem Wärmetauscherkern und dem Wärmetauschergehäuse kann beispielsweise durch das Verkleben und/oder das Verschweißen erzeugt sein. Durch das Verschweißen des Wärmetauscherkerns mit dem Wärmetauschergehäuse im Bereich des kürzesten Abstands zwischen der Außenseite des Wärmetauschergehäuses und dem Temperatursensor wird an der Verbindungsstelle eine besonders gute Wärmeleitfähigkeit zwischen dem Wärmetauscherkern und dem Wärmetauschergehäuse erreicht. Auch durch das Verkleben des Wärmetauscherkerns mit dem Wärmetauschergehäuse an der vorstehend bezeichneten Stelle kann eine gute wärmeleitende Verbindung zwischen dem Wärmetauscherkern und dem Wärmetauschergehäuse zur Bildung der gewünschten Wärmebrücke erreicht werden. Das Verkleben kann zusätzlich und/oder alternativ zu dem Verschweißen vorgesehen sein.

Es kann auch vorgesehen sein, dass das Wärmetauschergehäuse in der Nähe der Verbindungsmittel eine gegenüber dem Rest des Wärmetauschergehäuses reduzierte Wandstärke aufweist. Durch das Vorsehen einer reduzierten Wandstärke in der Nähe der Verbindungsmittel kann die Wärmekapazität der gebildeten Wärmebrücke zwischen dem Wärmetauscherkern und dem Temperatursensor reduziert werden, so dass eine Überhitzung im Bereich des Wärmetauscherkerns schneller durch den Temperatursensor detektierbar ist. Der Bereich der reduzierten Wandstärke an dem Wärmetauschergehäuse kann eine von der Leiterplatte aus gesehene Vertiefung an der Außenseite des Wärmetauschergehäuses bilden, die in räumlicher Nähe zu dem an der Leiterplatte angeordneten Temperatursensor liegt und in der sich das verwendete mit einem Dispenser-Verfahren applizierte Verbindungsmittel vorzugsweise ansammeln kann.

Es kann vorgesehen sein, dass auf einer von der Außenseite des Wärmetauschergehäuses abgewandten Seite der Leiterplatte die elektronischen Bauelemente angeordnet sind. Durch die Anordnung der elektronischen Bauelemente auf der von der Außenseite des Wärmetauschergehäuses abgewandten Seite der Leiterplatte kann die Umgebungstemperatur der elektronischen Bauelemente reduziert werden. Insbesondere kann der größere Abstand der elektronischen Bauelemente von der Außenseite des Wärmetauschergehäuses zur Reduzierung der Umgebungstemperatur der elektronischen Bauelemente beitragen.

Es kann vorgesehen sein, dass die elektronischen Bauelemente in der Ebene der Leiterplatte von dem Temperatursensor beabstandet angeordnet sind. Auf diese Weise kann ebenfalls die Umgebungstemperatur der elektronischen Bauelemente reduziert werden, da die elektronischen Bauelemente von der erwünschten Wärmebrücke zwischen der Außenseite des Wärmetauschergehäuses und dem Temperatursensor weiter entfernt angeordnet sind.

Es kann vorgesehen sein, dass die Leiterplatte Bereiche mit unterschiedlicher Wärmeleitfähigkeit aufweist, und dass zumindest der Bereich der Leiterplatte, auf dem der Temperatursensor angeordnet ist, eine gegenüber den übrigen Bereichen der Leiterplatte reduzierte Wärmeleitfähigkeit aufweist. Eine unterschiedliche Wärmeleitfähigkeit kann beispielsweise durch unterschiedlich dicke Bereiche der Leiterplatte realisiert werden. Die Wärmeleitfähigkeit in eine bestimmte Richtung innerhalb der Leiterplatte wird durch den verfügbaren Querschnitt der Leiterplatte mitbestimmt, der direkt proportional zur Dicke der Leiterplatte ist. Das Vorsehen von Bohrungen/Fräsungen durch die Leiterplatte, kann ebenfalls die verfügbare mittlere Querschnittsfläche in einigen Bereichen der Leiterplatte reduzieren.

Das vorstehend beschriebene Heizgerät kann insbesondere in einem Kraftfahrzeug als Heizgerät angeordnet sein und verwendet werden.

Die Erfindung wird nun mit Bezug auf die begleitenden Zeichnungen anhand bevorzugter Ausführungsformen beispielhaft erläutert.

Es zeigen:
- Figur 1: eine dreidimensionale Schnittansicht eines Ausschnitts eines Heizgerätes; und
- Figur 2: eine seitliche Schnittansicht eines Ausschnitts eines Heizgerätes.

Bei der nachfolgenden Beschreibung der Zeichnungen bezeichnen gleiche Bezugszeichen gleiche oder gleichartige Teile.

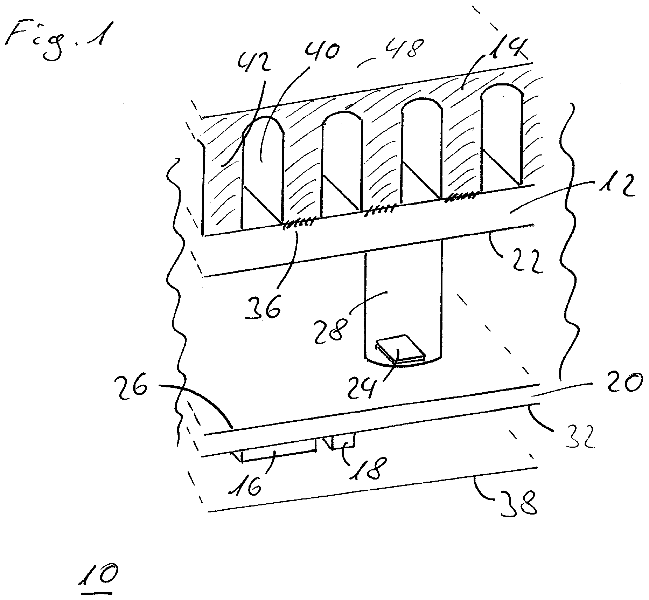

Figur 1 zeigt eine dreidimensionale Schnittansicht eines Ausschnitts eines Heizgerätes. Das dargestellte Heizgerät 10 umfasst einen Wärmetauscherkern 14, der beispielsweise im Inneren eines Wärmetauschergehäuses 12 angeordnet sein kann. Der Wärmetauscherkern 14 und das Wärmetauschergehäuse 12 können gemeinsam einen Wärmetauscher bilden. Das Wärmetauschergeäuse 12 kann den Wärmetauscher zumindest teilweise nach außen begrenzen. Der Wärmetauscherkern kann ebenfalls teilweise Außenflächen des gebildeten Wärmetauschers bereitstellen. Eine von dem Wärmetauscherkern 14 abgewandte Seite des Wärmetauschergehäuses 12 kann als Außenseite 22 des Wärmetauschergehäuses 12 aufgefasst werden. Der Wärmetauscherkern 14 kann zumindest bereichsweise physische Verbindungen 36 zu dem Wärmetauschergehäuse 12 aufweisen. Der Wärmetauscherkern 14 kann Rippen 42 umfassen, zwischen denen Zwischenräume 40 vorhanden sind. In den Zwischenräumen 40 kann zu erwärmendes Medium, beispielsweise zu erwärmendes Kühlmittel, an dem aufgeheizten Wärmetauscherkern 14 entlangströmen. Von den Zwischenräumen 40 getrennt kann beispielsweise auf dem Wärmetauscherkern 14 ein elektrisches Heizelement angeordnet werden. Die von dem elektrischen Heizelement bedeckte Fläche kann als Wärmeeintragsfläche angesehen werden, über die während des Betriebs des Heizgerätes 10 Wärme in den Wärmetauscherkern 14 gelangt. Für den Fall, dass das Heizgerät 10 kraftstoffbetrieben ist, kann als Wärmeeintragsfläche eine eine Brennkammer begrenzende Oberfläche des Wärmetauscherkerns 14 angesehen werden. Die Wärmeeintragsfläche des in Figur 1 dargestellten Wärmetauscherkerns 14 kann beispielsweise auf der von der Außenseite 22 abgewandten Rückseite des die Rippen 42 verbindenden Rückgrats 48 liegen. Diese Rückseite kann zugleich eine Außenseite des Wärmetauschers bilden. Die Verbindungen 36 zwischen dem Wärmetauscherkern 14 und dem Wärmetauschergehäuse 12 können beispielsweise form- und/oder kraft- und/oder stoffschlüssig sein. Durch das Verschweißen und/oder das Verkleben des Wärmetauschergehäuses 12 mit dem Wärmetauscherkern 14 an einer Verbindungsstelle kann eine besonders enge Verbindung erzeugt sein. Auf diese Weise kann an der Verbindungsstelle eine effiziente Wärmebrücke zwischen dem Wärmetauscherkern 14 und dem Wärmetauschergehäuse 12 erzeugt werden, über die Wärme schnell an den äußeren Rand des Wärmetauschers, das heißt an die Außenseite 22, transportiert wird.

Zur Steuerung/Regelung des Heizgerätes 10 erforderliche elektronische Bauelemente 16, 18 können auf einer Leiterplatte 20 angeordnet sein. Die Leiterplatte 20 kann insbesondere über eine in Figur 1 nicht sichtbare Vorrichtung in einem vorzugsweise definierten Abstand von der Außenseite 22 des Wärmetauschergehäuses 12 angeordnet sein. Die elektronischen Bauelemente 16, 18 können auf einer von der Außenseite 22 des Wärmetauschergehäuses 12 abgewandten Seite 32 der Leiterplatte 20 angeordnet sein. Ein Temperatursensor 24, der beispielsweise ein SMD-Temperatursensor sein kann, kann auf einer der abgewandten Seite 32 gegenüberliegenden Seite der Leiterplatte 20 angeordnet sein. Die der abgewandten Seite 32 gegenüberliegende Seite der Leiterplatte 20 kann eine der Außenseite 22 des Wärmetauschergehäuses 12 zugewandte Seite 26 sein. Die Leiterplatte 20 kann durch eine Abdeckung 38 vor unerwünschten äußeren Einflüssen geschützt werden. Die erwünschte physische Wärmebrücke zwischen dem Temperatursensor 24 und dem Wärmetauscher, insbesondere die wärmeleitende Verbindung zwischen dem Wärmetauschergehäuse 12 und dem Temperatursensor 24 kann durch Verbindungsmittel 28 bereitgestellt werden. Die Verbindungsmittel 28 können beispielsweise mithilfe eines Dispenser-Verfahrens in den gewünschten Bereich zwischen dem Wärmetauschergehäuse 12 und der Leiterplatte 20 dosiert werden Die Verbindungsmittel 28 können beispielsweise gut wärmeleitendes Silikon sein.

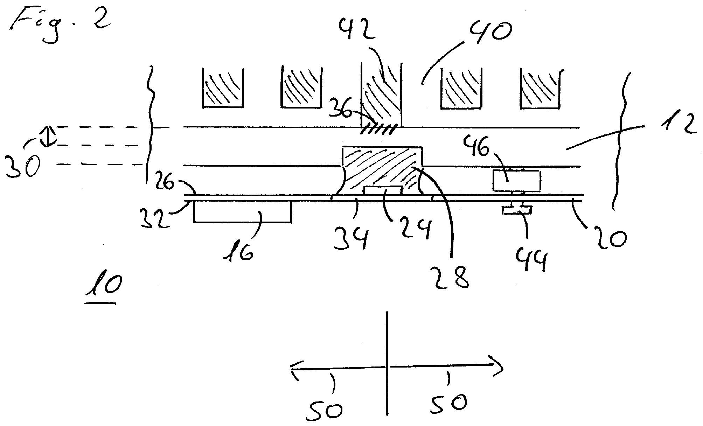

Figur 2 zeigt eine seitliche Schnittansicht eines Heizgerätes. Das in Figur 2 dargestellte Heizgerät 10 weist einen gegenüber dem in Figur 1 dargestellten Heizgerät leicht veränderten Aufbau auf. Die Rippen 42 des Wärmetauscherkerns 14 sind unterschiedlich lang, so dass sich in den weiter von dem Temperatursensor 24 entfernten Bereichen Zwischenräume 40 ergeben, die die kurzen Rippen 42 von dem Wärmetauschergehäuse 12 trennen. Auf diese Weise kann die Temperatur des Wärmetauschergehäuses 12 abseits des Temperatursensors 24 reduziert werden, so dass Energieverluste minimiert werden. Weiterhin ist in Figur 2 eine reduzierte Wandstärke 30 des Wärmetauschergehäuses 12 in der Nähe des Temperatursensors 24 erkennbar. Die reduzierte Wandstärke 30 in diesem Bereich verringert lokal die Wärmekapazität des Wärmetauschergehäuses 12, so dass Temperaturschwankungen innerhalb des Wärmetauschers, insbesondere innerhalb des Wärmetauscherkerns 14, schneller durch den Temperatursensor 24 erfassbar werden. Weiterhin kann die Applizierung der Verbindungsmittel 28, die insbesondere mithilfe eines Dispenser-Verfahrens erfolgen kann, vereinfacht werden, da sich diese leicht in einer im Bereich der reduzierten Wandstärke 30 von außen erkennbaren Vertiefung ansammeln können. Unter der Nähe zu dem Temperatursensor 24 kann insbesondere ein geringer Abstand 50 in der Ebene senkrecht zu der kürzesten Verbindung zwischen dem Temperatursensor 24 und der Außenseite 22 des Wärmetauschergehäuses 12 verstanden werden. Die Leiterplatte 20 kann mithilfe von Schrauben 44 unter Verwendung von Puffern 46 an der Außenseite 22 des Wärmetauschergehäuses 12 angeschraubt sein. Die Puffer 46 können beispielsweise elastisch sein. Die Puffer 46 können beispielsweise wärmeisolierend sein. Die Leiterplatte 20 kann einen Bereich 34 in der Nähe des Temperatursensors 24 umfassen, der eine gegenüber dem Rest der Leiterplatte 20 reduzierte Wärmeleitfähigkeit aufweist. Auf diese Weise kann die Betriebstemperatur der elektronischen Bauteile 16, 18 gering gehalten werden obwohl im Bereich des Temperatursensors 24 eine direkte Wärmebrücke zum Wärmetauscherkern 12 besteht.

Die in der vorstehenden Beschreibung und in den Zeichnungen offenbarten Merkmale unterstützen die in den Ansprüchen definierte .

### Bezugszeichenliste

- 10: Heizgerät
- 12: Wärmetauschergehäuse
- 14: Wärmetauscherkern
- 16: elektronisches Bauelement
- 18: elektronisches Bauelement
- 20: Leiterplatte
- 22: Außenseite
- 24: Temperatursensor
- 26: zugewandte Seite
- 28: Verbindungsmittel
- 30: reduzierte Wandstärke
- 32: abgewandte Seite
- 34: Bereich
- 36: Verbindung
- 38: Abdeckung
- 40: Zwischenraum
- 42: Rippe
- 44: Schraube
- 46: Puffer
- 48: Rückgrat
- 50: Abstand

## Patentansprüche

1. Heizgerät (10), insbesondere elektrisches Heizgerät für ein Kraftfahrzeug, mit einem Wärmetauschergehäuse (12), einem an einer Wärmeeintragsfläche Wärme aufnehmenden Wärmetauscherkern (14) und einer elektronische Bauelemente (16, 18) zur Steuerung des Heizgerätes (10) tragenden Leiterplatte (20),
- wobei die Leiterplatte (20) an einer Außenseite (22) des Wärmetauschergehäuses (12) angeordnet ist,
- wobei ein Temperatursensor (24) auf einer der Außenseite (22) des Wärmetauschergehäuses (12) zugewandten Seite (26) der Leiterplatte (20) angeordnet ist,
- wobei Verbindungsmittel (28) vorgesehen sind, die den Temperatursensor (24) wärmeleitend mit der Außenseite (22) des Wärmetauschergehäuses (12) verbinden, und
- wobei die Wärmeeintragsfläche des Wärmetauscherkerns (14) wärmeleitend mit dem Wärmetauschergehäuse (12) verbunden ist, so dass eine durch das Innere des Wärmetauschergehäuses (12) verlaufende durchgängige kurze Wärmebrücke zu den Verbindungsmitteln (28) erzeugt wird,
**dadurch gekennzeichnet, dass** der Temperatursensor (24) ein SMD-Sensor ist, der unmittelbar auf der Leiterplatte (20) verlötet ist.

2. Heizgerät (10) nach Anspruch 1, wobei die Wärmebrücke zwischen der Wärmeeintragsfläche des Wärmetauscherkerns (14) und den Verbindungsmitteln (28) eine Verbindung (36) zwischen dem Wärmetauschergehäuse (12) und dem Wärmetauscherkern (14) umfasst.

3. Heizgerät (10) nach Anspruch 2, wobei die Verbindung (36) stoffschlüssig ist.

4. Heizgerät (10) nach einem der Ansprüche 1 bis 3, wobei das Wärmetauschergehäuse (12) in der Nähe der Verbindungsmittel (28) eine gegenüber dem Rest des Wärmetauschergehäuses (12) reduzierte Wandstärke (30) aufweist.

5. Heizgerät (10) nach einem der Ansprüche 1 bis 4, wobei auf einer von der Außenseite (22) des Wärmetauschergehäuses (12) abgewandten Seite (32) der Leiterplatte (20) die elektronischen Bauelemente (16, 18) angeordnet sind.

6. Heizgerät (10) nach Anspruch 5, wobei die elektronischen Bauelemente (16, 18) in einer Ebene der Leiterplatte (20) von dem Temperatursensor (24) beabstandet angeordnet sind.

7. Heizgerät (10) nach Anspruch 5 oder 6, wobei die Leiterplatte (20) Bereiche mit unterschiedlicher Wärmeleitfähigkeit aufweist, und wobei zumindest der Bereich der Leiterplatte (20), auf dem der Temperatursensor (24) angeordnet ist, eine gegenüber den übrigen Bereichen der Leiterplatte (20) reduzierte Wärmeleitfähigkeit aufweist.

8. Kraftfahrzeug mit einem Heizgerät nach einem der Ansprüche 1 bis 7.

## Claims

1. A heating device (10), in particular an electric heating device for a motor vehicle, having a heat exchanger housing (12), a heat exchanger core (14) which absorbs heat at a heat input face, and a printed circuit board (20) supporting electronic components (16, 18) for controlling the heating device (10),
- wherein the printed circuit board (20) is arranged on an outer side (22) of the heat exchanger housing (12),
- wherein a temperature sensor (24) is arranged on a side (26) of the printed circuit board (20) which faces the outer side (22) of the heat exchanger housing (12),
- wherein connecting means (28) are provided, which connect the temperature sensor (24) in a heat-conducting fashion to the outer side (22) of the heat exchanger housing (12), and
- wherein the heat input face of the heat exchanger core (14) is connected in a heat-conducting fashion to the heat exchanger housing (12), with the result that a continuous short thermal bridge to the connecting means (28) is generated, which thermal bridge runs through the interior of the heat exchanger housing (12),
**characterized in that** the temperature sensor (24) is an SMD sensor, which is soldered directly onto the printed circuit board (20).

2. The heating device (10) as claimed in claim 1, wherein the thermal bridge between the heat input face of the heat exchanger core (14) and the connecting means (28) comprises a connection (36) between the heat exchanger housing (12) and the heat exchanger core (14).

3. The heating device (10) as claimed in claim 2, wherein the connection (36) is a substance bonded connection.

4. The heating device (10) as claimed in one of claims 1 to 3, wherein the heat exchanger housing (12) has a reduced wall thickness (30) in the proximity of the connecting means (28) compared to the rest of the heat exchanger housing (12).

5. The heating device (10) as claimed in one of claims 1 to 4, wherein the electronic components (16, 18) are arranged on a side (32) of the printed circuit board (20) which faces away from the outer side (22) of the heat exchanger housing (12).

6. The heating device (10) as claimed in claim 5, wherein the electronic components (16, 18) are arranged at a distance from the temperature sensor (24) in a plane of the printed circuit board (20).

7. The heating device (10) as claimed in claim 5 or 6, wherein the printed circuit board (20) has regions having different heat conductivity, and wherein at least the region of the printed circuit board (20) on which the temperature sensor (24) is arranged has a reduced heat conductivity compared to the other regions of the printed circuit board (20).

8. A motor vehicle having a heating device as claimed in one of claims 1 to .

## Revendications

1. Appareil de chauffage (10), en particulier appareil de chauffage électrique pour un véhicule automobile, comprenant un carter d'échangeur de chaleur (12), un noyau d'échangeur de chaleur (14) absorbant de la chaleur sur une surface d'apport de chaleur, et une carte de circuits imprimés (20) portant des composants électroniques (16, 18) pour commander l'appareil de chauffage (10),
- la carte de circuits imprimés (20) étant disposée sur une face extérieure (22) du carter d'échangeur de chaleur (12),
- un capteur de température (24) étant disposé sur une face (26) de la carte de circuits imprimés (20), tournée vers la face extérieure (22) du carter d'échangeur de chaleur (12),
- des moyens de raccordement (28) étant prévus qui raccordent le capteur de température (24) de manière thermoconductrice à la face extérieure (22) du carter d'échangeur de chaleur (12), et
- la surface d'apport de chaleur du noyau d'échangeur de chaleur (14) étant raccordée de manière thermoconductrice au carter d'échangeur de chaleur (12) de façon à créer un pont thermique court continu, s'étendant à travers l'intérieur du carter d'échangeur de chaleur (12) jusqu'aux moyens de raccordement (28), **caractérisé en ce que** le capteur de température (24) est un capteur SMD qui est soudé directement sur la carte de circuits imprimés (20).

2. Appareil de chauffage (10) selon la revendication 1, dans lequel le pont thermique entre la surface d'apport de chaleur du noyau d'échangeur de chaleur (14) et les moyens de raccordement (28) comprend un raccordement (36) entre le carter d'échangeur de chaleur (12) et le noyau d'échangeur de chaleur (14).

3. Appareil de chauffage (10) selon la revendication 2, dans lequel le raccordement (36) est réalisé par liaison de matière.

4. Appareil de chauffage (10) selon l'une quelconque des revendications 1 à 3, dans lequel le carter d'échangeur de chaleur (12) présente à proximité des moyens de raccordement (28) une épaisseur de paroi (30) réduite par rapport au reste du carter d'échangeur de chaleur (12).

5. Appareil de chauffage (10) selon l'une quelconque des revendications 1 à 4, dans lequel les composants électroniques (16, 18) sont disposés sur une face (32) de la carte de circuits imprimés (20), détournée de la face extérieure (22) du carter d'échangeur de chaleur (12).

6. Appareil de chauffage (10) selon la revendication 5, dans lequel les composants électroniques (16, 18) sont disposés dans un plan de la carte de circuits imprimés (20) à distance du capteur de température (24).

7. Appareil de chauffage (10) selon la revendication 5 ou 6, dans lequel la carte de circuits imprimés (20) présente des zones de différentes conductivités thermiques, et dans lequel au moins la zone de la carte de circuits imprimés (20) dans laquelle est disposé le capteur de température (24) présente une conductivité thermique réduite par rapport aux autres zones de la carte de circuits imprimés (20).

8. Véhicule automobile comprenant un appareil de chauffage selon l'une quelconque des revendications 1 à 7.
